(19)

Europäisches
Patentamt
European
Patent Office
Office européen
des brevets

(11)　**EP 3 168 791 A1**

(12)　　　　　　　　**EUROPEAN PATENT APPLICATION**

(43) Date of publication:
　　**17.05.2017　Bulletin 2017/20**

(51) Int Cl.:
　　*G06N 5/02* (2006.01)　　　*G06F 17/30* (2006.01)

(21) Application number: **16182686.2**

(22) Date of filing: **04.08.2016**

(84) Designated Contracting States:
　　**AL AT BE BG CH CY CZ DE DK EE ES FI FR GB
　　GR HR HU IE IS IT LI LT LU LV MC MK MT NL NO
　　PL PT RO RS SE SI SK SM TR**
　　Designated Extension States:
　　**BA ME**
　　Designated Validation States:
　　**MA MD**

(30) Priority:　**10.11.2015　GB 201519816**

(71) Applicant: **FUJITSU LIMITED
　　211-8588 Kanagawa (JP)**

(72) Inventors:
　　• **MENDES RODRIGUES, Eduarda
　　　Northwood, HA6 2NL (GB)**

　　• **HU, Bo
　　　Winchester, SO23 7DT (GB)**
　　• **ALBORNOZ, Jose
　　　Iver Heath, SL0 0DL (GB)**
　　• **BORDONS, Carmen C
　　　London, Greater London W5 2RU (GB)**
　　• **MUNOZ, Manuel P
　　　41006 Sevilla (ES)**

(74) Representative: **Wilding, Frances Ward
　　Haseltine Lake LLP
　　Lincoln House, 5th Floor
　　300 High Holborn
　　London WC1V 7JH (GB)**

(54)　　**METHOD AND SYSTEM FOR DATA VALIDATION IN KNOWLEDGE EXTRACTION APPARATUS**

(57)　　A relation validation system comprising: a relation extraction module configured to extract a given relation $r_j$, $j=1,...,m$ between entities from a particular one of n data sources $s_1.....s_n$; and a relation validation module connected to the relation extraction module and to a knowledge base storing relations, validity scores for the relations and reliability scores for the n data sources, the relation validation module being configured: if the given relation is not already represented in the knowledge base: to set a default validity score Pr(r) and store the given relation and the default validity score in the knowledge base; and if the given relation is already represented by one or more associated relations in the knowledge base: to use one or more validity scores for the one or more associated relations from the knowledge base to set a prior validity score Pr(r), to retrieve a prior reliability score Pr(s) for each data source from which the given relation or an associated relation has been extracted, to compute a posterior validity score $V_j$ for the given relation from the prior reliability scores Pr(s), and to compute a posterior reliability score $R_i$ for each data source from which the given relation or an associated relation has been extracted from the prior validity score $V_j$.

FIG. 1

**Description**

The present invention relates to validation of relations, which can be collected from data in one or more data stores and then held in a knowledge base, such as a triple store. They may be collected manually, or preferably automatically or semi-automatically.

Data, particularly if collected and extracted through automated or semi-automated processes, is prone to errors and inconsistencies. Such data validity problems can occur due to sub-optimal information extraction methods and / or due to errors in the data itself. In systems where data validity is a major concern (e.g. financial applications), the data may be verified and assessed manually by domain experts. In other systems, crowd-sourcing approaches can be applied, which still involve substantial human effort.

The data may be collected from data stores (such as data bases) which store data using different data models. These days there are a multitude of data models available for use. To name a few generic types of data models, there are key value stores, relational data stores, graph data stores, document-oriented data stores and column-based data stores. Some commercial databases use data models which have features of more than one of these types.

Key value stores use associative arrays, with a data structure commonly known as a dictionary, which contains objects or records, each with a number of different fields within them. There may be different fields for every record.

Relational databases store data in rows and columns. The rows and columns compose tables that need to be defined before storing the data. The definition of the tables and the relationship between data contained on these tables is called a schema. A relational database uses a fixed schema (or structure). A relational database management system (RDBMS) is a database management system (DBMS) that is based on the relational model. SQL, or Structured Query Language is a special-purpose programming language designed for manipulating data in a relational-model data store.

Graph databases represent a significant extension over relational databases by storing data in the form of nodes and arcs, where a node represents an entity or instance, and an arc represents a relationship of some type between any two nodes. In an undirected graph, an arc from node A to node B is considered to be the same as an arc from node B to node A. In a directed graph, the two directions are treated as distinct arcs.

Graph databases can be used to maintain large "semantic networks" that can store large amounts of structured and unstructured data in various fields. A semantic network is used as a form of knowledge representation and is a directed graph consisting of nodes that represent concepts, and arcs that represent semantic relationships between the concepts.

There are several types of graph representations. Graph data may be stored in memory as multidimensional arrays, or as symbols linked to other symbols. Another form of graph representation is the use of "tuples," which are finite sequences or ordered lists of objects, each of a specified type, such as a Uniform Resource Identifier, URI. The knowledge base itself may well use tuples for storage, as do many data stores. A tuple containing n objects is known as an "n-tuple," where n can be any non-negative integer greater than zero. A tuple of length 2 (a 2-tuple) is commonly called a pair, a 3 -tuple is called a triple, a four-tuple is called a quadruple, and so on.

Triples are one of the most commonly used tuples. Each triple can be visualised as a subject-predicate-object (s-p-o) statement or relation. Optionally, the triples may be Resource Description Framework (RDF) triples. The Resource Description Framework is a general method for conceptual description or modelling of information that is a standard for semantic networks. Standardising the modelling of information in a semantic network allows for interoperability between applications operating on a common semantic network. RDF maintains a vocabulary with unambiguous formal semantics, by providing the RDF Schema (RDFS) as a language for describing vocabularies in RDF.

An RDF graph/triples can be queried (accessed) using the SPARQL Protocol and RDF Query Language (SPARQL). It was standardized by the RDF Data Access Working Group (DAWG) of the World Wide Web Consortium, and is considered a key semantic web technology.

Linked data is intended to define a set of standards and best practices for publishing and linking structured data on the Web. Linked data extends the web by providing semantic mark-up of data, using RDF, designed specifically for use in the context of the Web and potentially also OWL (Ontology Web Language) which permits further semantic annotation and analysis. LOD (Open Linked Data) envisages a network of knowledge with data semantically annotated using the so-called ontologies which are readable and understandable by both human inspectors and machines.

Another data model is used in so-called document-based (or document-oriented) data stores, which are semi-structured (there is no separation between the data and the schema) or schema-free (unstructured). These may be classified as NoSQL (not only SQL) databases, which provide for storage and retrieval of data modeled other than in the tabular relational databases. For example, MongoDB is a document-oriented database which thus (like XML databases) relies on internal structure to extract metadata. It is classified as a noSQL database, with a format known as BSON (or Binary JSON), similar to JSON (JavaScript Object Notation): it can be queried using a Mongo API (Application Programming Interface).

Whichever model(s) are used in the data store(s) from which relations are collected, the issue of validating the data remains. There is a linked issue, which is the reliability of the data store(s) themselves, from which the data is extracted. It is desirable to find a way of validating data, preferably without or with a minimum of human intervention.

According to an embodiment of a first aspect of the invention, there is provided a relation validation system comprising: a relation extraction module configured to extract a given relation $r_j$, $j=1,...,m$ between entities from a particular one of n data sources $s_1.....s_n$; and a relation validation module connected to the relation extraction module and to a knowledge base storing relations, validity scores for the relations and reliability scores for the n data sources. The relation extraction module may be additionally configured to check if the given relation is not already represented in the knowledge base. The relation validation module is configured if the given relation is not already represented in the knowledge base to set a default validity score Pr(r) and store the given relation and the default validity score in the knowledge base. The relation validation module is also configured, if the given relation is already represented by one or more associated relations in the knowledge base, to use one or more validity scores for the one or more associated relations from the knowledge base to set a prior validity score Pr(r), to retrieve a prior reliability score Pr(s) for each data source from which the given relation or an associated relation has been extracted, to compute a posterior validity score $V_j$ for the given relation from the prior reliability scores Pr(s), and to compute a posterior reliability score $R_i$ for each data source from which the given relation or an associated relation has been extracted from the prior validity score $V_j$.

Embodiments of the invention focus on automating the data validation problem. They propose a new way of determining the reliability of data sources, while defining at the same time the validity of the extracted (or collected) data. The inventors realised that reliability of a data source may for example depend on a prior value that reflects its reputation as well as its merit relative to other data sources. Equally, the validity of each extracted relation (data or factoid) may be assessed based on cross-validation with a set of data sources where the relation was present, weighted by the reliability of such data sources. This linked relationship can be used to quantify the validity of a relation as well as the reliability of the data source from which the relation is extracted.

Incidentally, the following description refers to relations, which includes explicit or implicit mappings, links or associations between a plurality of entities, for example specifying a relationship between two entities. The entities can be any property, object, abstraction or concept and include for example any numbers, parameters, objects, labels, text, URLs, etc. Often a relation may be in the form of a triple or other tuple.

The relation validation module may be further configured to store the given relation, the posterior reliability scores $R_i$ and the posterior validity score $V_j$ in the knowledge base, or some other functionality may be provided.

In some embodiments, the relation validation module is further configured to (iteratively) use the computed posterior validity score $V_j$ as the next prior validity score Pr(r) and the computed posterior reliability scores $R_j$ as the next prior reliability scores Pr(s) and to re-calculate a new posterior validity score and new posterior reliability scores. That is, the validity score is updated, potentially more than once, using the previously calculated reliability score and vice versa.

In this context, the relation validation module may be further configured to continue the iterations until the reliability scores and/or the validity scores in subsequent iterations do not differ by more than a threshold amount. The threshold amount may be a percentage or actual difference in value or any other preferred threshold.

A default validity score can be used if the given relation is not represented in the knowledge base. For example the default validity score may be a standard preset value (for use in all circumstances), such as 0.5. This may be a middle value if the validity (and reliability) score varies between 0 and 1. Alternatively, the default may be set dependent on a reliability score of the data source from which it has been extracted.

As a further alternative if the given relation is not represented in the knowledge base, the default validity score may be determined based on the co-occurrence of the entities in the relation in web (internet) pages or in any other data dissemination medium such as open data sources or RSS feeds. The co-occurrence of the entities may be calculated for example by computing the ratio of the number of times either of the entities occurs in web pages to the number of times the relation occurs in web pages, or any other appropriate mechanism.

In a simple case, a given relation may be represented in the knowledge base by an associated relation which is either the same or an equivalent relation (for example in that it uses slightly different "linguistics"). However, in more complex cases, a relation in the knowledge base may be an associated relation by virtue of equivalence and/or semantic inclusion and/or contradiction.

For example, if there is an equivalent relation, the validity score of the equivalent relation contributes to the prior validity score Pr(r), perhaps with the contribution having the same validity as that of the equivalent relation.

If there is a semantic inclusion of the given relation in the associated relation or vice versa, the validity score of the semantic inclusion relation may contribute to the prior validity score Pr(r), perhaps with a contribution lower than the validity of the associated relation in the knowledge base.

If there is a contradiction between the given relation and the associated relation, the validity score of the contradicting relation may contribute to the prior validity score Pr(r), perhaps with a contribution that is "inverse" to that of the validity of the associated relation in the database. For example in a system of validity values between 0 and 1, the contribution may be 1- the validity of the associated relation.

Any or all of the validity scores for the associated relations linked to the given relation by equivalence, semantic inclusion and contradiction may be used together to set the prior validity score Pr(r), preferably by means of averaging.

A new data source can have a default reliability value that can be a parameter of the system depending on the user's configuration of the system. For example, the user may set a pessimistic default reliability value that favours already trusted sources. However, in other embodiments, the relation validation module is further configured to compute a prior reliability score for a new data source (which has not previously contributed to the knowledge base). This prior reliability score may use a ranking mechanism, for example a web site ranking mechanism. The relation validation module may store the prior reliability score in the knowledge base, for example when the relation extracted from the new data source is stored.

The relation validation module may be further configured to take into account an accuracy factor related to accuracy of the data extraction when computing the prior reliability score for the new data source. The accuracy factor may take into account the intrinsic accuracy of the particular extraction method used for each specific data source, and may thus have a constant effect that can differ across different data sources.

According to an embodiment of a further aspect, there is provided a method of assessing the validity of a given relation $r_j$, $j=1,...,m$ between entities, the relation being extracted from a particular one of n data sources $s_1.....s_n$ for storage in a knowledge base, the knowledge base storing relations, a validity score for each extracted relation and a reliability score for each data source from which a relation has been extracted, the method comprising: if the given relation is not already represented in the knowledge base: setting a default validity score Pr(r) and storing the given relation and the default validity score in the knowledge base; and if the given relation is already represented in the knowledge base by one or more associated relations: using one or more validity scores for the one or more associated relations from the knowledge base to set a prior validity score Pr(r), retrieving a prior reliability score Pr(s) for each data source from which the given relation or an associated relation has been extracted, computing a posterior validity score $V_j$ for the given relation from the prior reliability scores Pr(s), and computing a posterior reliability score $R_i$ for each data source from which the given relation or an associated relation has been extracted from the prior validity score $V_j$.

According to an embodiment of a still further aspect, there is provided a computer program which when executed on a computing apparatus carries out a method of assessing the validity of a given relation $r_j$, $j=1,...,m$ between entities, the relation being extracted from a particular one of n data sources $s_1.....s_n$ for storage in a knowledge base, the knowledge base storing relations, a validity score for each extracted relation and a reliability score for each data source from which a relation has been extracted, the method comprising: if the given relation is not already represented in the knowledge base: setting a default validity score Pr(r) and storing the given relation and the default validity score in the knowledge base; and if the given relation is already represented in the knowledge base by one or more associated relations: using one or more validity scores for the one or more associated relations from the knowledge base to set a prior validity score Pr(r), retrieving a prior reliability score Pr(s) for each data source from which the given relation or an associated relation has been extracted, computing a posterior validity score $V_j$ for the given relation from the prior reliability scores Pr(s), and computing a posterior reliability score $R_i$ for each data source from which the given relation or an associated relation has been extracted from the prior validity score $V_j$.

According to an embodiment of a final aspect, there is provided a database system including a knowledge base and data collectors connected to a relation validation system according to any of the definitions herein.

A method or computer program according to preferred embodiments of the present invention can comprise any combination of the previous apparatus aspects. Methods according to these further embodiments can be described as computer-implemented in that they require processing and memory capability.

The apparatus according to preferred embodiments is described as configured or arranged to carry out certain functions. This configuration or arrangement could be by use of hardware or middleware or any other suitable system. In preferred embodiments, the configuration or arrangement is by software.

Thus according to one aspect there is provided a program which, when loaded onto at least one hardware module, configures the at least one hardware module to become the validation system according to any of the preceding apparatus definitions or any combination thereof.

According to a further aspect there is provided a program which when loaded onto the at least one hardware module configures the at least one hardware module to carry out the method steps according to any of the preceding method definitions or any combination thereof.

The invention can be implemented in digital electronic circuitry, or in computer hardware, firmware, software, or in combinations of them. The invention can be implemented as a computer program or computer program product, i.e., a computer program tangibly embodied in an information carrier, e.g., in a machine-readable storage device or in a propagated signal, for execution by, or to control the operation of, one or more hardware modules. A computer program can be in the form of a stand-alone program, a computer program portion or more than one computer program and can be written in any form of programming language, including compiled or interpreted languages, and it can be deployed in any form, including as a stand-alone program or as a module, component, subroutine, or other unit suitable for use in a data processing environment. A computer program can be deployed to be executed on one module or on multiple modules at one site or distributed across multiple sites and interconnected by a communication network.

Method steps of the invention can be performed by one or more programmable processors executing a computer

4

program to perform functions of the invention by operating on input data and generating output.

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

Test scripts and script objects can be created in a variety of computer languages. Representing test scripts and script objects in a platform independent language, e.g., Extensible Markup Language (XML) allows one to provide test scripts that can be used on different types of computer platforms.

The invention is described in terms of particular embodiments. Other embodiments are within the scope of the following claims. For example, the steps of the invention can be performed in a different order and still achieve desirable results. Multiple test script versions can be edited and invoked as a unit without using object-oriented programming technology; for example, the elements of a script object can be organized in a structured database or a file system, and the operations described as being performed by the script object can be performed by a test control program.

Elements of the invention have been described using the terms "module" and "knowledge base" etc. The skilled person will appreciate that such terms and their equivalents may refer to parts of an apparatus that are spatially separate but combine to serve the function defined. Equally, the same physical parts of an apparatus may provide two or more of the functions defined. For example, separately defined means may be implemented using the same memory and/or processor as appropriate.

Non-limiting embodiments of the invention will now be described with reference to the attached figures, in which:

Figure 1 is an overview diagram of the structure of a relation validation system;
Figure 2 is a flow diagram of the method steps of a general invention embodiment;
Figure 3 is a block diagram of an arrangement for knowledge extraction;
Figure 4 is a matrix representation of a specific invention embodiment;
Figure 5 is a flow diagram giving an overview of a relation validation method used in invention embodiments;
Figure 6 is a flowchart of steps in checking the existence of a given relation;
Figure 7 is a flowchart with one method for scoring prior relation validity; and
Figure 8 is a block diagram of a computing device, such as a data storage server, which embodies the present invention.

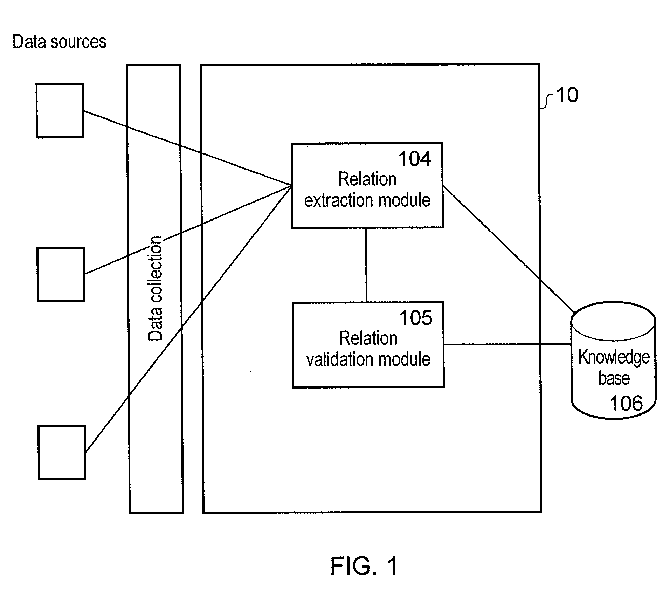

Figure 1 shows the interrelationship between a relation extraction module 104 and a relation validation module 105 within a relation validation system 10, and the connection to other components, which need not be part of the system. The relation extraction module receives input in the form of data from data collectors (not shown in detail) which extract/collect data from different data sources. For example, data can be collected using standard web crawlers or public data APIs. The relation extraction module extracts relations from the data using techniques which are available to the person skilled in the art. The modules are implemented in software.

The relations are input to the relation validation module 105, along with (prior) validity (before processing) from the knowledge base 106 if the given relation is already represented in the knowledge base 106. The knowledge base may be a standard or specialised database. The knowledge base can be constructed using standard storage technologies which may be graph data bases, relational data bases, file systems, etc. The invention embodiments do not restrict the kind of technology or procedure used to build this knowledge base.

If the given relation is not already represented in the knowledge base (by an associated relation), it is given a default validity by the validation module. Otherwise, there are two linked processes to calculate a new (posterior) validity and a new (posterior) reliability for the data sources involved. The (prior) reliability of the data sources for the associated relation(s) and for the given relation is used to calculate the (new) validity of the relation. The (prior) validity of the given relation is used to calculate the (new) reliability of the same data sources (from which the given relation and associated relation(s) stem). This crossover processing allows efficient derivation of the interdependent updated reliability of the data sources and validity of the given relation.

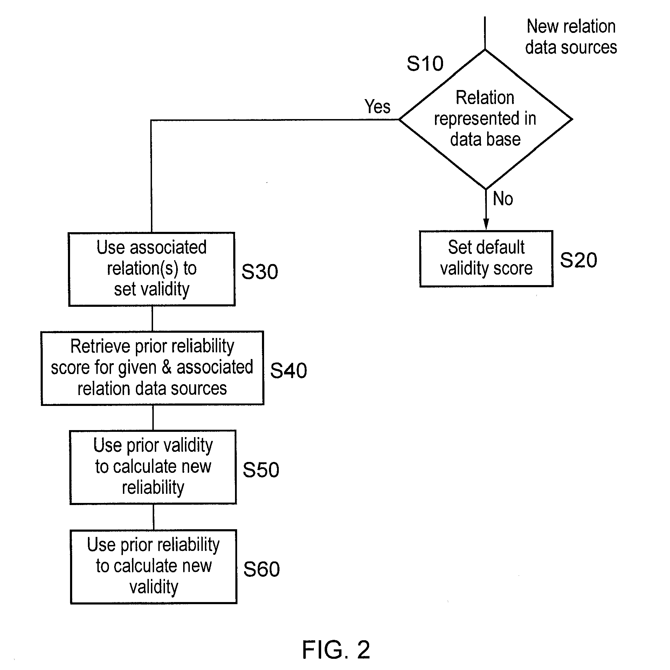

Figure 2 shows a basic flowchart for a general invention embodiment. In step S10, the validation module determines whether the extracted given relation is already represented in the knowledge base. If not, the relation is simply given a default validity in step S20. If the given relation is already represented (by an associated relation), then validity of the associated relation is used to set a prior validity score in step S30. In step S40 the reliability score is retrieved for the data sources from which the given relation and associated relation(s) have been extracted. In steps S50 and S60 (which may take place in either order or simultaneously), the prior validity is used to calculate the new reliability for each data source and the prior reliability for each data source is used to calculate the new validity.

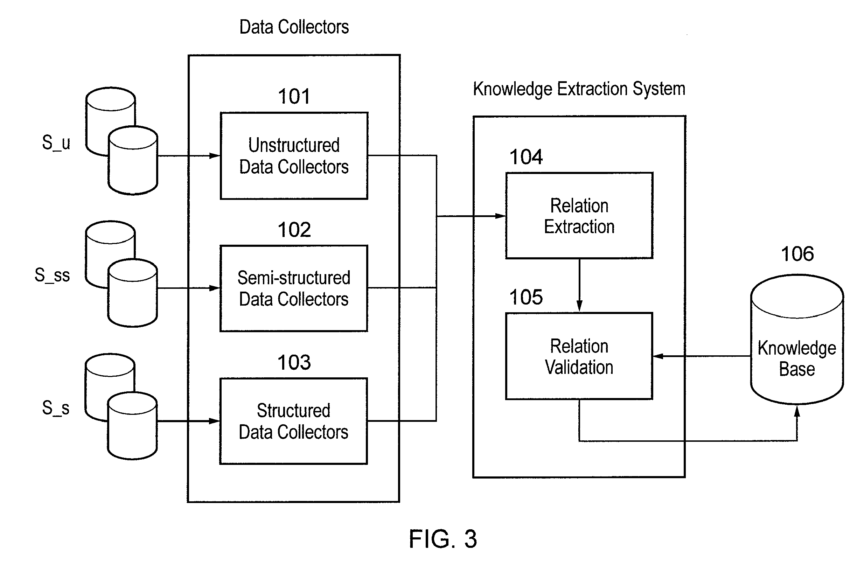

Figure 3 is a block diagram showing an arrangement for knowledge extraction including relation validation. Invention embodiments propose a new method and system for data validation in a knowledge extraction apparatus which provides/updates a knowledge base. One possible embodiment could use a server to house the invention components, but the components could also be built using a cloud-based, distributed implementation. A knowledge extraction system receives data from a set of data collectors $S_u$, $S_{ss}$ and $S_s$ for unstructured (101), semi-structured (102) and/or structured (103) data sources respectively and applies known techniques to extract relations from data using module 104. The data collectors may include processors and network connections.

The relation extraction module 104 extracts factoids from the data (i.e., unverified statements), which may already be represented as relations (for example triples) in a knowledge base 106. The relations may be stored, for instance, as Linked Data s-p-o statements or as a generic property graph or other graph. The relation extraction module also consults the existing knowledge base, to check if a given relation already exists/is represented by an associated relation. If so, an updated validity score is computed by module 105. If not, it adds the new relation to the knowledge base with a default validity score, which may be proportional to the reliability score of its data source or determined in some other way. The knowledge base may be a database stored in memory (for example in a server) with a network connection.

A specific example of the use of invention embodiments would be in amassing information about key people associated with a given organisation, such as board members or directors. The data on which this information is based can be extracted from a number of sources, each of them with a different degree of reliability. At the same time, each of the relations from which links between a person and an organisations is established may have different degrees of validity, as in the case of a temporal assignment to a particular organisation (e.g. board members that change over time.)

## Relations

Invention embodiments work using relation extraction in (software) module 104, and relations may be defined as follows:

A domain of discourse (over which variables of interest may range) $D$ is a tuple $\langle E, R \rangle$, where $E$ is the set of entities and R the set of relations, mapping one entity to another:

$$R: e_i \in E \rightarrow e_j \in E.$$

Hence a relation may be viewed as mapping one entity in a data source to another entity in the same data source, or as specifying a relationship between two entities in the same data source, thus making the relationship explicit. A relation can be labelled or unlabelled. An unlabelled relation signifies a co-existence of the two entities in the same data source whereas a labelled relation imposes some form of semantic restriction on the nature of the relation. It is expected that

$$R = \bigcup_{i \in L} R_i$$

where $R$ is the set of all relations in a given data set, whilst $R_i$ is the *i-th* relationship identified in the data set $L$.

A labelled relation presents a more complicated situation due to the introduction of semantics. In invention embodiments, the methods are suitable for both labelled and unlabelled relations.

## Relation Extraction

The source of the relations varies, but is often web-based. In general, relations can be extracted from structured data (103), e.g. free database and ontology models (such as those published using standard XML based ontology mark-up language, RDF(S), OWL, etc.). Specific queries (e.g. SQL; SPARQL; XPath; etc.) can be designed to extract the relations. Relations can also be extracted from unstructured text sources (101) using (language specific) linguistic patterns and other well established techniques in natural language processing, such as named entity resolution and relation mining. Widely used English patterns are available from the literature. Semi-structured data (102) such as Wikipedia or other web content (e.g. HTML tables) also serve as a critical source of mining, where pre-defined information extraction templates can be applied to collect the desired relations.

Due to the complexity introduced by semantics, it is possible to have several layers of abstractions. Mapping between a relation and linguistic patterns leading to the relation can be restricted to one-to-many for simplicity. For instance, "is-a" relation can be materialised as "CCC such as xxx, yyy, ..." or "CCC including xxx, yyy, ...". Hence these are equivalent relations. Linguistic patterns and the specifics of the relation extraction techniques are beyond the scope of this document, but available in the art.

**Relation Validity Model**

Let $S$ be the set of $n$ data sources collected and processed by a knowledge extraction system. This system can consume different types of sources including for example unstructured data $S_u$ (e.g. news content, email messages, user-generated content, images, voice recordings, etc.), semi-structured data $S_{ss}$ (e.g. HTML tables, forms, etc.) and structured data $S_s$ (e.g. Linked Open Data, XML files): $S = S_u \cup S_{ss} \cup S_s = \{s_1, s_2, ..., s_n\}$.

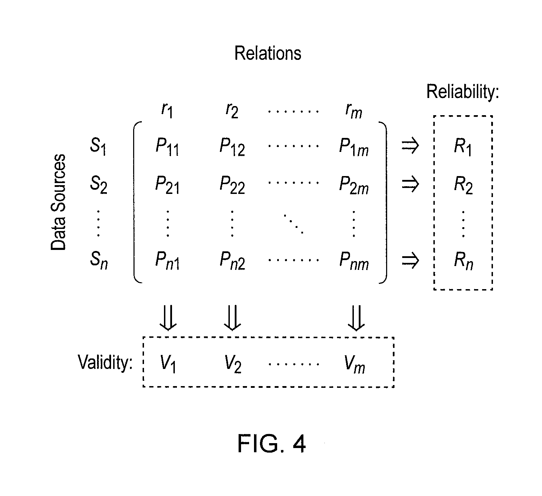

Each extracted factoid / relation $r_j$, $j = 1,..., m$ may have a prior probability of being a valid relation before being added to the knowledge base. The posterior probability of each relation is automatically computed by the relation validity module 105 and it represents the validity $V_j$, $j = 1{:}m$ or "truthfulness" of the extracted factoid. Similarly, a data source may have a prior probability of being reliable and its posterior probability $R_i$, $i = 1,...,n$ is computed based on the validity of the extracted factoids. This circular dependency between relation validity and data source reliability is depicted in Figure 4. It can be appreciated that the reliability of a given data source is determined by the validity of the relations it contains: the greater the number of valid relations in the data source, the more reliable this data source is. At the same time, the reliability of a data source influences the validity of the relations it contains: relations extracted from a highly reliable data source are in general expected to be valid ones. This circular dependency is represented formally in Figure 4, which shows a matrix representation of the interdependency between data source reliability and relation validity: the rows of this matrix correspond to data sources $s_1, s_2, \cdots s_n$ whilst the columns correspond to relations $r_1, r_2, \cdots r_m$. Thus for example, a data source $s_i$ has a reliability $R_i$ that is determined by the validity of the relations $p_{i1}, p_{i2}, \cdots p_{im}$ contained within it; at the same time, a relation $r_i$ vas a validity $V_i$ that depends on the validities $p_{1i}, p_{2i}, ... p_{mi}$ of this particular relation across data sources $s_1, s_2, \cdots s_n$ Each column of the matrix could represent a) a single relation which may have resulted from combining several equivalent relations, or b) a relation which may have equivalents represented by other columns of the matrix. Here, we are only considering data sources in which some form of the considered relationships is expected to be observed.

The relation validity model can take into account the fact that any extracted factoid may be semantically equivalent to one or more other existing relation (in the knowledge base). In other cases the relations may contradict each other. Furthermore, relations at different abstraction levels may subsume each other to some degree. This can happen in case of labelled relations, where it is possible that a relation at higher abstraction level is combination of all those at lower abstraction level. For instance, "adjacent-to" can be broken down to "left to", "right to", etc.

It follows that two relations $r_i$ and $r_j$ can be associated with each other either by equivalence, by contradiction or by semantic inclusion. Equivalent and semantically related factoids can be reconciled using semantic processing technology, in which case the validity score of the reconciled factoid is a function of the original scores (e.g. average score).

The relation validation method of invention embodiments may, for example assume a version of the following axioms:

- The posterior reliability $R_i$ of a data source $s_i$ depends on the proportion of valid relations extracted from the data source, relative to other data sources.
- The posterior validity $V_j$ of a factoid or relation $r_j$ depends on the proportion of reliable data sources that confirm the relation.
- The validity scores of contradicting relations $r_i \perp r_j$ should sum up to 1.
- The validity scores of equivalent relations $r_i \equiv r_j$ should be similar.
- The validity score of a relation semantically included in another relation $r_i \subset r_j$, should at most have a similar validity score, that is $V_i \leq V_j$.

Assuming that the validity values $p_{ij}$ in the matrix of Figure 4 are either 1 or 0, and that $R_i \leq 1$ and $V_i \leq 1$, an exemplary embodiment of the invention complying with the above axioms is defined by the following rules:

- The posterior reliability $R_i$ of the i-th data source is computed by averaging its prior reliability $Rpri_i$ with the quotient of the number of valid relations for this source and the total number of relations considered, namely

$$R_i = 0.5 \cdot \left( Rpri_i + \frac{\sum_{j=0}^{m} p_{ij}}{m} \right)$$

- The posterior validity $V_j$ of the i-th factoid is determined by averaging the prior validity $Vpri_j$ of this factoid with the quotient of the number of valid relations for this particular factoid across all data sources and the total number of data sources, namely

$$V_j = 0.5 \cdot \left( Vpri_j + \frac{\sum_{k=0}^{n} p_{kj}}{n} \right)$$

Compliance with the last three axioms follows naturally after these definitions since the resulting posterior values of the reliability and validity scores will be at most one.

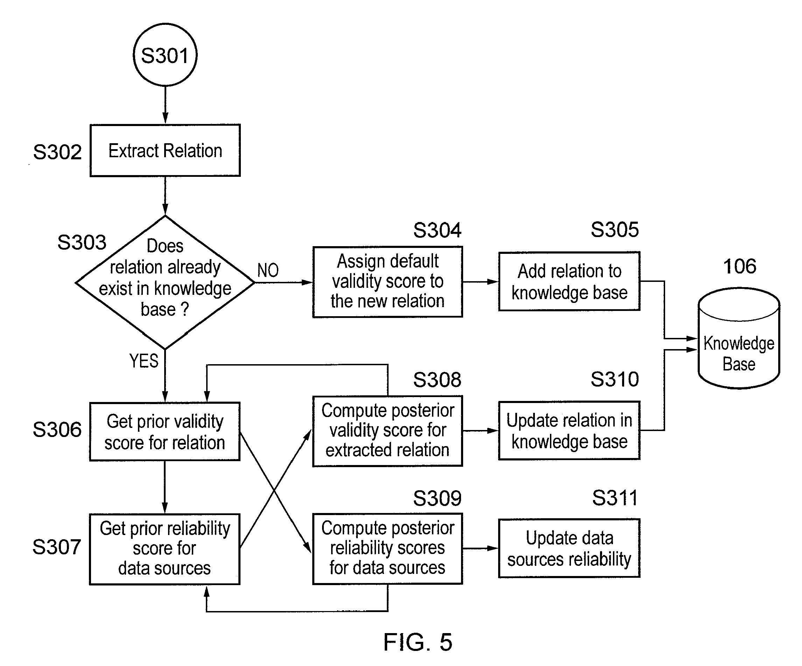

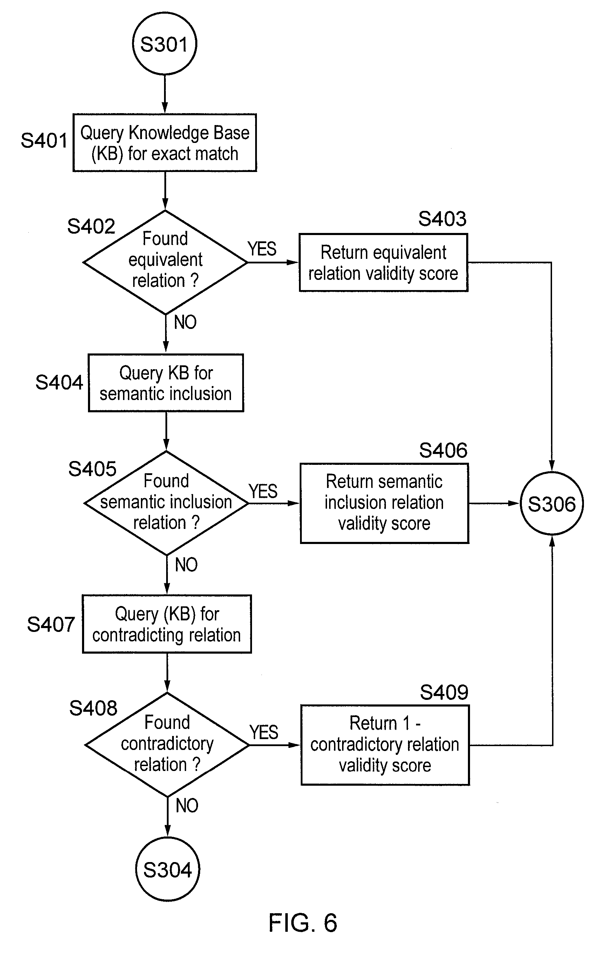

Figure 5 depicts a flow diagram of the relation validation procedure. The process starts at step S301 with a data source from which relations are extracted in step S302. Each relation is checked against the existing knowledge base (106) in step S303 to verify if it already exists. This particular step is further detailed in Figure 6, since the step can check not only for equivalence, but also for contradiction and semantic inclusion relations.

In case of a new relation, a default validity score (e.g. 0.5) is assigned to the relation and in step S305 it is added to the knowledge base. At this stage, the reliability of the data source need not be changed until a subsequent extraction detects the same relation in one or more different data sources (there is no additional validity data to update the data source reliability).

If the relation is already in the knowledge base, step S306 retrieves the prior validity score and step S307 retrieves the prior reliability scores of all the data sources from which the relation has been extracted. The posterior scores are computed iteratively in steps S308 and S309 sequentially and in either order. Once the computation converges below a pre-defined error margin, the new scores are updated in steps S310 and S311. We note that the concept of the reliability of a given data source can be associated to either the knowledge base or stored separately from the relations (e.g. in a file.)

In Figure 6 further detail is provided about the process by which the system verifies in step S301 if a relation already exists in the knowledge base or not.

Firstly, in step 401 the knowledge based is queried to check if there is already an exact match for the given relation. At step S402 the algorithm verifies if an equivalent relation has been found; if so, step S403 returns the current validity score of that relation. Otherwise, the system then applies semantic technology in step S404 to infer if the given relation includes or is included in some other existing relation. At step S405 the algorithm verifies if a semantic relation has been found; if so, at step S406 the new relation will inherit a score derived from the current scores of the semantically related relations (e.g. if more than one relation is identified, the derived score can be the average). In the final steps, S407 and 408, an attempt is made to identify contradicting relations and if found, the prior validity score will be assigned as 1 minus the current validity score of the contradictory relation at step S409.

The inputs thus created to step S306 may be summed and averaged.

**Prior Data Source Reliability**

Prior data source reliability is a score between 1 and 0 and may be calculated whenever data is extracted from a new data source, and therefore at least for system initialisation. Relation data are sourced from different repositories and corpora, each associated with a certain prior reliability value. The computation of the reliability value can consider two important aspects: reputation and accuracy:

$$\Pr(s) = \alpha \cdot Rank(s) + \beta \cdot \Delta(Acc)$$

The prior reliability of a data source $\Pr(s)$ needs to take into account the reputation of the data source. Such reputation can be established from generalized web site ranking methods (in case of web-based repositories), which assign some importance score $Rank(s)$.

The second aspect that impacts reliability of the data source is the accuracy of the relation extraction method. Each method has an intrinsic accuracy ($Acc$) established from performance evaluation. This means that even a reputable data source may well be penalized by some error $\Delta$ in terms of its reliability due to an intrinsic fallacy of the extraction algorithm (i.e. the data source was correct, but an extraction error occurred). Since a given algorithm is applied to a set of data sources, the accuracy issue is assumed to affect all data sources within this set in approximately equal proportion. Hence a factor $\Delta(Acc)$ may or may not be included in the prior reliability score.

The parameters $\alpha$ and $\beta$ allow to adjust the weights with which data source reputation and extraction accuracy affect prior data source reliability.

**Prior Relation Validity**

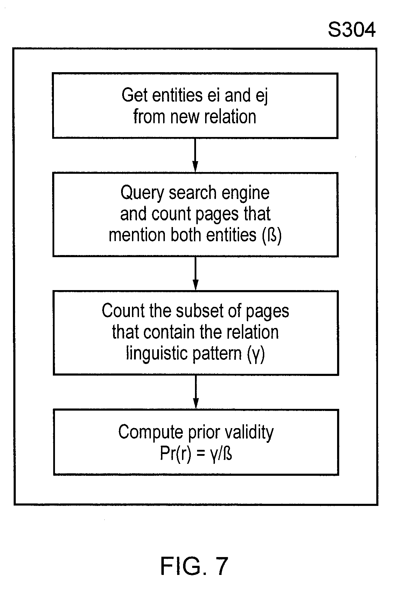

Figure 7 shows a flowchart with one method for scoring prior relation validity. For each new extracted relation a default validity score is assigned in step S304, which is detailed as follows. The default score establishes the prior relation validity Pr(r), which can be estimated as a search engine based measure by the following steps:

Given two entities $e_i$ and $e_j$ and the given relation r,

1. Compute the total number of results of search engine query "$e_i \wedge e_j$" as $\beta$, from indexed web pages
2. For every linguistic pattern $\pi_i$ leading to the conclusion of $r$, compute the total number of hits of search query "$\pi_i(e_i, e_j)$" as $\gamma$
3. Assign as default validity score Pr($r$) = $\gamma/\beta$

**Posterior Reliability and Validity Scores**

The knowledge extraction system accumulates a wealth of relations over time, which enables us to estimate more accurately the reliability of each data source and the validity of each individual relation. A probabilistic data model is adopted, with a major assumption that each selected data source is independent from each other. This assumption rules out cross-citing of other data sources (e.g. citing news story among new portal sites).

With this assumption, the overall posterior relation validity probability is derived taking into account the reliability of all the data sources where the given relation has been observed. The score is defined as (step S308):

$$V = \Pr(r|s_1, \ldots, s_N) = \alpha \cdot \frac{\prod_{i \in [1, \ldots, N]} \Pr(s_i|r) \cdot \Pr(r)}{\prod_{i \in [1, \ldots, N]} \Pr(s_i)}$$

Similarly, the overall posterior probability for data source reliability depends on it consistently being a source of multiple valid relations. The score is defined as (step S309):

$$R = \Pr(s|r_1, \ldots, r_M) = \beta \cdot \frac{\prod_{j \in [1, \ldots, M]} \Pr(r_j|s) \cdot \Pr(s)}{\prod_{j \in [1, \ldots, M]} \Pr(r_j)}$$

Where:

i. Pr($r|s_1,\ldots,s_N$) is the validity score expressed as the conditional probability of relation $r$ being valid given its presence in a set of $N$ independent data sources.

ii. Pr($s_i|r$) is the reliability score for source $i$ expressed as the conditional probability of that source given a particular relation $r$ found in this source.

iii. Pr($s_i$) is the updated overall validity score for data source $s_i$.

iv. Pr($s|r_1,\ldots,r_M$) is the reliability score for a source $s$ expressed as the conditional probability of data source $s$ being reliable given a set of $M$ relations found in it.

v. Pr($r_j|s$) is the validity score for relation $j$ expressed as the conditional probability of that relation being valid given a particular data source $s$.

vi. Pr($r_j$) is the updated overall reliability score for relationship $r_j$.

The expressions for the overall posterior validity and the overall posterior reliability probabilities presented above represent a Bayesian update of the respective prior probabilities under the assumption of statistical independence of the data sources.

Pr($r$) and Pr($s$) correspond to the prior scores, initially defined for example as described in the previous two sections. Once the new validity score is estimated, that score is set as the new prior value in subsequent computations (steps S306 and S307 in figure 5).

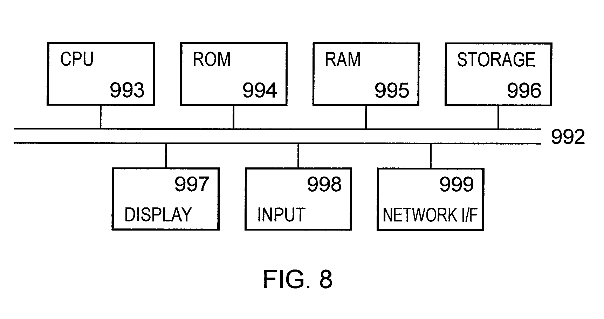

Figure 8 is a block diagram of a computing device, such as a data storage server, which embodies the present invention, and which may be used to implement a method of an embodiment. The computing device comprises a computer processing unit (CPU) 993, memory, such as Random Access Memory (RAM) 995, and storage, such as a hard disk, 996. The computing device also includes a network interface 999 for communication, for example with other computing devices, such as data collectors and a knowledge base. Alternatively, these two components may be included within the computing device. Optionally, the computing device also includes Read Only Memory 994, one or more input mechanisms such as keyboard and mouse 998, and a display unit such as one or more monitors 997. The components are connectable to one another via a bus 992.

The CPU 993 is configured to control the computing device and execute processing operations required by the invention embodiment modules. The RAM 995 stores data being read and written by the CPU 993. The storage unit 996 may be, for example, a non-volatile storage unit, and is configured to store data.

The display unit 997 displays a representation of data stored by the computing device and may also display a cursor and dialog boxes and screens enabling interaction between a user and the programs and data stored on the computing device. The input mechanisms 998 enable a user to input data and instructions to the computing device. These input mechanisms allow the user to specify data sources, relations, extraction mechanisms as well as parameters such as $\alpha$ and $\beta$.

The network interface (network I/F) 999 is connected to a network, such as the Internet, and is connectable to other such computing devices via the network. The network I/F 999 controls data input/output from/to other apparatus via the network. Other peripheral devices such as microphone, speakers, printer, power supply unit, fan, case, scanner, trackerball etc may be included in the computing device.

Methods embodying the present invention may be carried out on a computing device such as that illustrated in Figure 8. Such a computing device need not have every component illustrated in Figure 8, and may be composed of a subset of those components. A method embodying the present invention may be carried out by a single computing device in communication with one or more data storage servers via a network. The computing device may be a data storage itself storing at least a portion of a data graph forming a knowledge base. A method embodying the present invention may be carried out by a plurality of computing devices operating in cooperation with one another. One or more of the plurality of computing devices may be a data storage server storing at least a portion of the data graph.

**Claims**

1. A relation validation system comprising:

   a relation extraction module configured to extract a given relation $r_j$, $j=1,...,m$ between entities from a particular one of n data sources $s_1.....s_n$; and
   a relation validation module connected to the relation extraction module and to a knowledge base storing relations, validity scores for the relations and reliability scores for the n data sources, the relation validation module being configured:

      if the given relation is not already represented in the knowledge base:
      to set a default validity score Pr(r) and store the given relation and the default validity score in the knowledge base; and
      if the given relation is already represented by one or more associated relations in the knowledge base:

         to use one or more validity scores for the one or more associated relations from the knowledge base to set a prior validity score Pr(r),
         to retrieve a prior reliability score Pr(s) for each data source from which the given relation or an associated relation has been extracted,
         to compute a posterior validity score $V_j$ for the given relation from the prior reliability scores Pr(s), and
         to compute a posterior reliability score $R_i$ for each data source from which the given relation or an associated relation has been extracted from the prior validity score $V_j$.

2. A system according to claim 1, wherein the relation validation module is further configured to store the given relation, the posterior reliability scores $R_i$ and the posterior validity score $V_j$ in the knowledge base.

3. A system according to claim 1 or 2, wherein the relation validation module is further configured to iteratively use the computed posterior validity score $V_j$ as the next prior validity score Pr(r) and the computed posterior reliability scores $R_j$ as the next prior reliability scores Pr(s) and to re-calculate a new posterior validity score and new posterior reliability scores.

4. A system according to any of the preceding claims, wherein the relation validation module is further configured to continue the iterations until the reliability scores and/or the validity scores in subsequent iterations do not differ by more than a threshold amount.

5. A system according to any of the preceding claims, wherein if the given relation is not represented in the knowledge base, the default validity score is a standard preset value, such as 0.5, or is set dependent on the reliability score of the data source from which it has been extracted.

6.  A system according to any of claims 1 to 4, wherein if the given relation is not represented in the knowledge base, the default validity score is determined based on the co-occurrence of the entities in the relation in web pages.

7.  A system according to any of the preceding claims, wherein a given relation may be represented in the knowledge base by an associated relation by virtue of equivalence and/or semantic inclusion and/or contradiction.

8.  A system according to claim 7, wherein if there is an equivalent relation, the validity score of the equivalent relation contributes to the prior validity score Pr(r); and/or
    wherein if there is a semantic inclusion of the given relation in the associated relation or vice versa, the validity score of the semantic inclusion relation contributes to the prior validity score Pr(r); and/or
    wherein if there is a contradiction between the given relation and the associated relation, the validity score of the contradicting relation contributes to the prior validity score Pr(r).

9.  A system according to claim 7 or 8, wherein validity scores for the associated relations linked to the given relation by equivalence, semantic inclusion and contradiction are all used together to set the prior validity score Pr(r), preferably by means of averaging.

10. A system according to any of the preceding claims, wherein the relation validation module is further configured to compute a prior reliability score for a new data source based on a ranking mechanism, for example a web site ranking mechanism, and to store the prior reliability score in the knowledge base, for example when the relation extracted from the new data source is stored.

11. A system according to claim 10, wherein the relation validation module is further configured to take into account an accuracy factor related to accuracy of the data extraction when computing the prior reliability score for the new data source.

12. A method of assessing the validity of a given relation $r_j$, $j=1,...,m$ between entities, the relation being extracted from a particular one of n data sources $s_1.....s_n$ for storage in a knowledge base, the knowledge base storing relations, a validity score for each extracted relation and a reliability score for each data source from which a relation has been extracted, the method comprising:

    if the given relation is not already represented in the knowledge base:

        setting a default validity score Pr(r) and storing the given relation and the default validity score in the knowledge base; and
        if the given relation is already represented in the knowledge base by one or more associated relations:

            using one or more validity scores for the one or more associated relations from the knowledge base to set a prior validity score Pr(r),
            retrieving a prior reliability score Pr(s) for each data source from which the given relation or an associated relation has been extracted,
            computing a posterior validity score $V_j$ for the given relation from the prior reliability scores Pr(s), and computing a posterior reliability score $R_i$ for each data source from which the given relation or an associated relation has been extracted from the prior validity score $V_j$.

13. A computer program which when executed on a computer carries out a method of assessing the validity of a given relation $r_j$, $j=1,...,m$ between entities, the relation being extracted from a particular one of n data sources $s_1.....s_n$ for storage in a knowledge base, the knowledge base storing relations, a validity score for each extracted relation and a reliability score for each data source from which a relation has been extracted, the method comprising:

    if the given relation is not already represented in the knowledge base:

        setting a default validity score Pr(r) and storing the given relation and the default validity score in the knowledge base; and
        if the given relation is already represented in the knowledge base by one or more associated relations:

using one or more validity scores for the one or more associated relations from the knowledge base to set a prior validity score Pr(r),

retrieving a prior reliability score Pr(s) for each data source from which the given relation or an associated relation has been extracted,

computing a posterior validity score $V_j$ for the given relation from the prior reliability scores Pr(s), and computing a posterior reliability score $R_i$ for each data source from which the given relation or an associated relation has been extracted from the prior validity score $V_j$.

14. A database system including a knowledge base and data collectors connected to a relation validation system according to any of claims 1 to 11.

Data sources

Data collection

104
Relation
extraction module

10

105
Relation
validation module

Knowledge
base
106

FIG. 1

New relation
data sources

S10

Relation
represented in
data base

Yes

No

Use associated
relation(s) to
set validity
S30

Retrieve prior reliability
score for given & associated
relation data sources
S40

Use prior validity
to calculate new
reliability
S50

Use prior reliability
to calculate new
validity
S60

Set default
validity score
S20

FIG. 2

Data Collectors

Knowledge Extraction System

S_u

**101**
Unstructured Data Collectors

**102**
Semi-structured Data Collectors

**103**
Structured Data Collectors

S_ss

S_s

**104**
Relation Extraction

**105**
Relation Validation

**106**
Knowledge Base

FIG. 3

Relations

$$\begin{array}{c} \text{Data Sources} \end{array} \begin{array}{c} S_1 \\ S_2 \\ \vdots \\ S_n \end{array} \begin{array}{ccccc} r_1 & r_2 & \cdots\cdots & r_m \\ \begin{pmatrix} P_{11} & P_{12} & \cdots\cdots & P_{1m} \\ P_{21} & P_{22} & \cdots\cdots & P_{2m} \\ \vdots & \vdots & \ddots & \vdots \\ P_{n1} & P_{n2} & \cdots\cdots & P_{nm} \end{pmatrix} \end{array} \begin{array}{c} \Rightarrow \\ \Rightarrow \\ \\ \Rightarrow \end{array} \begin{array}{c} \text{Reliability:} \\ R_1 \\ R_2 \\ \vdots \\ R_n \end{array}$$

$$\Downarrow \quad \Downarrow \quad \quad \Downarrow$$

Validity: $\quad V_1 \quad V_2 \quad \cdots\cdots \quad V_m$

FIG. 4

FIG. 5

S301

S302 Extract Relation

S303 Does relation already exist in knowledge base ?

NO

S304 Assign default validity score to the new relation

S305 Add relation to knowledge base

YES

S306 Get prior validity score for relation

S307 Get prior reliability score for data sources

S308 Compute posterior validity score for extracted relation

S309 Compute posterior reliability scores for data sources

S310 Update relation in knowledge base

S311 Update data sources reliability

106 Knowledge Base

S301

S401 | Query Knowledge Base (KB) for exact match

S402 Found equivalent relation ?

YES → S403 Return equivalent relation validity score

NO ↓

S404 | Query KB for semantic inclusion

S405 Found semantic inclusion relation ?

YES → S406 Return semantic inclusion relation validity score

NO ↓

S407 | Query (KB) for contradicting relation

S408 Found contradictory relation ?

YES → S409 Return 1 - contradictory relation validity score

NO ↓

S304

S306

FIG. 6

S304

FIG. 7

FIG. 8

Europäisches
Patentamt

European
Patent Office

Office européen
des brevets

# EUROPEAN SEARCH REPORT

Application Number

EP 16 18 2686

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/114949 A1 (MCCLUNG SUSAN [US] ET AL) 24 April 2014 (2014-04-24) * paragraph [0003] - paragraph [0008] * * paragraph [0032] - paragraph [0051] * * paragraph [0083] - paragraph [0132] * * figures 1-12 * | 1-14 | INV. G06N5/02 G06F17/30 |
| A | WO 2015/084757 A1 (QBASE LLC [US]) 11 June 2015 (2015-06-11) * paragraph [0063] - paragraph [0114] * * figures 1-8 * | 1-14 | |
| A | US 2015/310301 A1 (ZADEH LOTFI A [US]) 29 October 2015 (2015-10-29) * paragraph [0093] * * paragraph [0388] - paragraph [0573] * | 1-14 | |

TECHNICAL FIELDS
SEARCHED        (IPC)

G06N
G06F

The present search report has been drawn up for all claims

| Place of search | Date of completion of the search | Examiner |
|---|---|---|
| The Hague | 7 March 2017 | Heider, Thomas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 16 18 2686

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2017

| Patent document cited in search report | | Publication date | Patent family member(s) | | Publication date |
|---|---|---|---|---|---|
| US 2014114949 | A1 | 24-04-2014 | NONE | | |
| WO 2015084757 | A1 | 11-06-2015 | NONE | | |
| US 2015310301 | A1 | 29-10-2015 | US | 8311973 B1 | 13-11-2012 |
| | | | US | 9171261 B1 | 27-10-2015 |
| | | | US | 9262688 B1 | 16-02-2016 |
| | | | US | 9424533 B1 | 23-08-2016 |
| | | | US | 2013080369 A1 | 28-03-2013 |
| | | | US | 2013080370 A1 | 28-03-2013 |
| | | | US | 2013330008 A1 | 12-12-2013 |
| | | | US | 2014188462 A1 | 03-07-2014 |
| | | | US | 2015149155 A1 | 28-05-2015 |
| | | | US | 2015310301 A1 | 29-10-2015 |

EPO FORM P0459

For more details about this annex : see Official Journal of the European Patent Office, No. 12/82